Europäisches Patentamt

European Patent Office

Office européen des brevets

(11) Numéro de publication : **0 280 105 B1**

(12) **FASCICULE DE BREVET EUROPEEN**

(45) Date de publication du fascicule du brevet :
15.05.91 Bulletin 91/20

(51) Int. Cl.$^5$ : **H04M 9/10**

(21) Numéro de dépôt : **88101780.0**

(22) Date de dépôt : **08.02.88**

(54) **Dispositif anti-effet larsen pour poste téléphonique.**

(30) Priorité : 10.02.87 FR 8701650

(43) Date de publication de la demande :
31.08.88 Bulletin 88/35

(45) Mention de la délivrance du brevet :
15.05.91 Bulletin 91/20

(84) Etats contractants désignés :
AT BE CH DE ES FR GB GR IT LI LU NL SE

(56) Documents cités :
EP-A- 0 082 755
FR-A- 2 164 357
FR-A- 2 500 698

(73) Titulaire : **ALCATEL BUSINESS SYSTEMS**
**12, rue de la Baume**
**F-75008 Paris (FR)**

(72) Inventeur : **Abraham, Denis**
**109-111 rue Jean Bleuzen**
**F-92170 Vanves (FR)**
Inventeur : **Chataignon, André**
**9 rue de l'Abbé Fleury**
**F-95100 Argenteuil (FR)**
Inventeur : **Malaurie, Claude**
**16-1 Mail Renaissance**
**F-95120 Ermont (FR)**

(74) Mandataire : **Weinmiller, Jürgen et al**
**Lennéstrasse 9 Postfach 24**
**W-8133 Feldafing (DE)**

## Description

La présente invention concerne un dispositif anti-effet Larsen s'installant dans un poste téléphonique à haut-parleur.

On connaît par le brevet français 2 500 698 un dispositif anti-effet Larsen qui comporte un atténuateur commandé placé a l'entrée de l'amplicateur du haut-parleur du poste téléphonique et mis en service en présence d'oscillations à la fréquence d'environ de 2 kHz, dans le signal de sortie du microphone du poste téléphonique qui sont caractéristiques d'un effet Larsen.

Ce dispositif anti-effet Larsen remplace le sifflement désagréable d'un effet Larsen par des "BIPS" sonores de faible amplitude jusqu'à ce que l'abonné éloigne suffisamment son microphone du haut-parleur pour faire cesser l'effet Larsen. Cependant, lors des opérations de décrochage et de raccrochage du combiné téléphonique, le microphone est souvent suffisamment rapproché du haut-parleur pour que l'effet Larsen s'amorce et entraîne l'émission de "BIPS" sonores nuisant au confort d'utilisation de l'abonné.

La présente invention a pour but de lutter contre l'inconvénient précité.

Elle a également pour but d'améliorer le confort subjectif d'écoute d'un abonné dans le cas de postes téléphoniques employant un microphone à efficacité électrique linéaire tel qu'un microphone électrodynamique ou un microphone à électrets qui sont en ambiance bruyante d'un confort subjectif d'écoute moindre que ceux utilisant le traditionnel microphone à charbon.

Elle a pour objet un dispositif anti-effet Larsen comportant en plus de l'atténuateur commandé placé devant l'amplificateur du haut-parleur et activé en présence d'oscillations a la fréquence d'environ 2 kHz dans le signal du microphone, un atténuateur commandé intercalé entre le microphone du poste téléphonique et son circuit d'aiguillage deux fils-quatre fils et mis en service à chaque fois que le microphone est soumis à une pression d'excitation acoustique inférieure à un seuil minimum proportionnel au niveau du signal d'excitation du haut-parleur.

Selon une autre caractéristique de l'invention, le dispositif anti-effet Larsen comporte en outre un atténuateur commandé supplémentaire qui est intercalé devant l'amplicateur du haut-parleur et qui fonctionne en opposition avec l'atténuateur commandé intercalé derrière le microphone.

Le seuil minimum de pression d'excitation acoustique du microphone en de ça duquel l'atténuateur commandé intercalé derrière le microphone est mis en service varie avantageusement dans le même sens que le niveau d'excitation du haut-parleur en restant dans une plage de 70 à 90 dBSPL et les affaiblissements apportés par l'atténuateur commandé intercalé derrière le microphone et par l'atténuateur commandé supplémentaire sont de l'ordre de 6 à 10 dB.

Selon une autre caractéristique de l'invention, l'atténuateur. commandé intercalé derrière le microphone est contrôlé par un détecteur de niveau à seuil variable qui est connecté en sortie du microphone et qui possède un premier temps de réponse de l'ordre de 10 ms pour engendrer une commande de mise en service de l'atténuateur et un deuxième temps de réponse de l'ordre de 3 ms pour engendrer une commande de mise hors service de l'atténuateur.

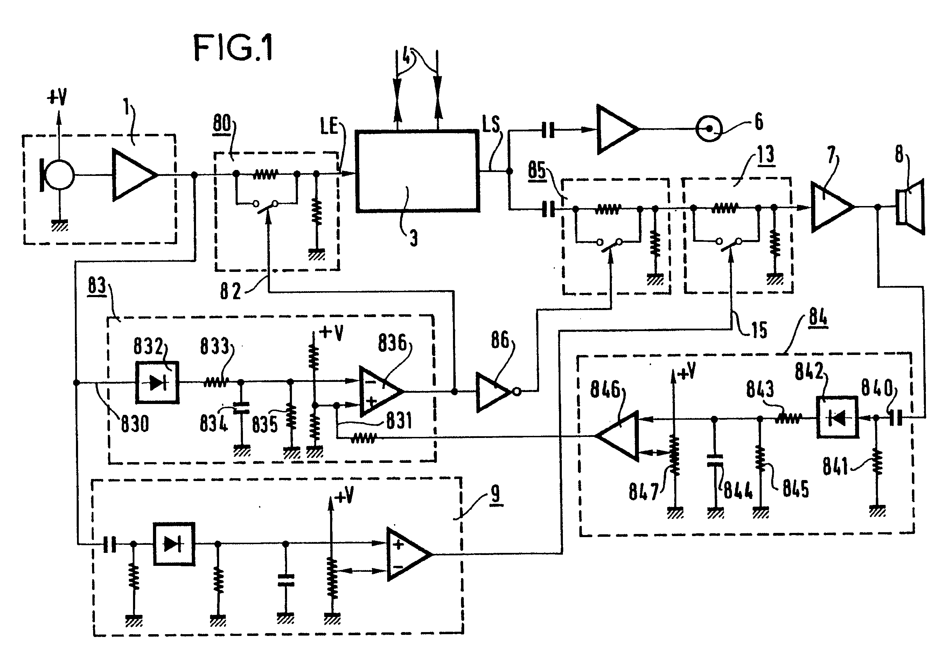

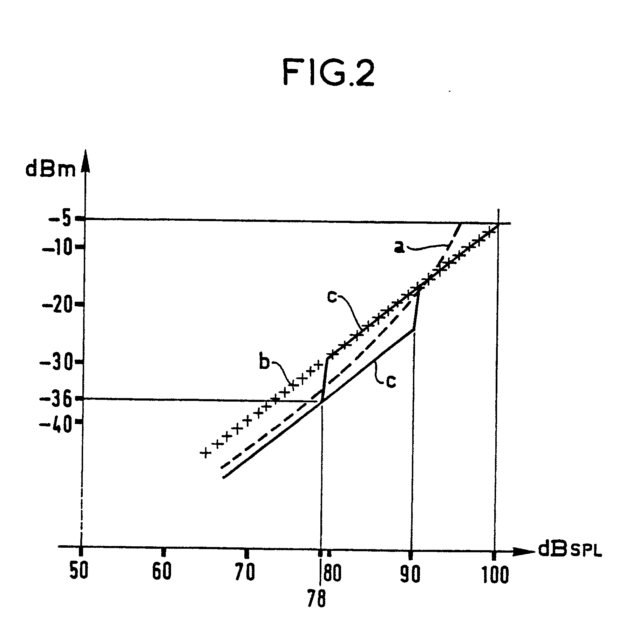

D'autres caractéristiques et avantages de l'invention ressortiront de la description ci-après d'un mode de réalisation donné à titre d'exemple. Cette description sera faite en regard du dessin dans lequel la figure 1 est un schéma électrique d'un dispositif anti-effet Larsen selon l'invention monté dans un poste ou terminal téléphonique à haut-parleur et la figure 2 un diagramme de courbes illustrant les caractéristiques de ce dispositif.

On distingue sur la figure 1 les principaux éléments d'un poste téléphonique à haut-parleur relié à une ligne téléphonique bifilaire 4, notamment, le circuit d'aiguillage deux fils-quatre fils 3 séparant localement les sens émission LE et réception LS qui sont superposés dans la ligne téléphonique bifilaire 4, le microphone 1 connecté à la voie émission LE, côté quatre fils, du circuit d'aiguillage 3 ainsi que l'écouteur 6 et le haut-parleur 8 avec son amplificateur 7 connectés à la voie réception LS, côté quatre fils, du circuit d'aiguillage 3.

Sur ce poste téléphonique à haut-parleur est installé un dispositif anti-effet Larsen avec son atténuateur commandé 13 qui est intercalé devant l'entrée de l'amplificateur 7 du haut-parleur 8 et dont la commande d'activation 15 est contrôlée par un détecteur 9 d'oscillations à la fréquence d'environ 2 kHz opérant sur la sortie du microphone 1.

Le microphone 1 est un microphone à efficacité électrique linéaire à sortie amplifiée tel qu'un microphone électro-dynamique ou un microphone à électrets équipé d'un amplificateur, car ce type de microphone a, depuis l'avénement de la technique des circuits intégrés, des caractéristiques nettement plus performantes que les microphones à charbon notamment du point de vue de l'encombrement, de la consommation en courant, de la fidélité de reproduction de la voix et du coût de production en série.

L'atténuateur commandé 13, représenté par un pont diviseur résistif dont l'une des résistances est shuntée par un contact commandable, est en fait réalisé sous une forme intégrable par exemple selon le schéma de réalisation décrit dans le brevet français 2 500 698 relativement à sa figure 2.

Le détecteur d'oscillations 9 est formé au moyen d'un filtre passe-haut à capacité série et résistance parallèle isolant les oscillations à 2kHz de l'effet Larsen et les fréquences hautes de la parole, suivi d'un redresseur détectant l'enveloppe du signal délivré par le filtre passe-haut, d'un filtre passe-bas de lissage à résistance série et capacité parallèle atténuant les fréquences hautes de la parole et d'un comparateur à seuil. En cas de détection d'oscillations importantes aux environs de 2 kHz, dans le signal amplifié de sortie du microphone 1, il met en service l'atténuateur commandé 13, c'est-à-dire provoque l'affaiblissement du signal en entrée de l'amplificateur 7 du haut-parleur 8, afin de faire cesser le bouclage à l'origine de l'effet Larsen tandis qu'en l'absence de détection de ces oscillations, il met hors service l'atténuateur commandé 13 afin que celui-ci se laisse traverser par le signal d'excitation de l'amplificateur 7 du haut-parleur 8 sans l'affaiblir.

Le dispositif anti-effet Larsen limité à ces éléments déjà connus supprime le sifflement désagréable engendré par un effet Larsen et le remplace par des "BIPS" sonores de faible amplitude qui signalent à l'abonné que son microphone est trop près du haut-parleur et qu'il faut l'éloigner. En cas d'ambiance bruyante, l'effet Larsen se produit à chaque décrochage et accrochage du combiné sur son socle et entraîne l'émission de BIPS sonores nuisant au confort d'utilisation du poste téléphonique.

Outre ces éléments, on distingue sur la figure un deuxième atténuateur commandé 80 qui est intercalé entre la sortie amplifiée du microphone 1 et la voie émission LE, cote quatre fils du circuit d'aiguillage 3 et dont la commande d'activation 82 est contrôlée par un détecteur de niveau 83 à seuil variable opérant qui la sortie amplifiée du microphone 1.

Ce deuxième atténuateur commandé 80 est représenté comme le premier 13 par un pont diviseur résitif dont une des résistances est shuntée par un contact commandable et est, comme cet atténuateur commandé, réalisé à l'aide d'éléments actifs sous une forme intégrable. Il est mis en service et affaiblit d'environ 7 dB le niveau du signal du microphone 1 parvenant au circuit d'aiguillage 3 lorsque sa commande d'activation 82 reçoit une tension positive proche de la tension de polarisation. Il est mis hors service et se laisse traverser par le signal du microphone 1 sans l'atténuer lorsque sa commande d'activation 82 reçoit une tension nulle ou très faible.

Le détecteur de niveau à seuil variable 83 présente une entrée de mesure de niveau 830 connectée à la sortie amplifiée du microphone 1 et une entrée de réglage de seuil 831 connectée à la sortie d'un générateur de seuil de niveau 84 opérant à partir du signal de sortie de l'amplificateur 7 du haut-parleur 8. Il comporte, à son entrée de mesure de niveau 830, un redresseur 832 suivi d'un filtre passe-bas à résistance série 833, capacité parallèle 834 et résistance parallèle 835 de décharge de la capacité, et un comparateur 836 qui est connecté par son entrée inverseuse en sortie du filtre passe-bas et par son entrée non inverseuse, à l'entrée de réglage de seuil 831, et qui contrôle la commande d'activation 82 de l'atténuateur commandé 80.

Le redresseur 832 détecte l'enveloppe du signal de la sortie amplifiée du microphone 1. Le filtre passe-bas intègre cette enveloppe avec une constante de temps de montée de l'ordre de 3 ms determinée par les valeurs de la résistance série 833 et de la capacité parallèle 834, et avec une constante de temps de descente de l'ordre de 10 ms déterminée par les valeurs de la capacité parallèle 834 et de la résistance parallèle 835. Il permet de donner au détecteur de niveau à seuil variable 83 un premier temps de réponse de 10 ms pour mettre en service le deuxième atténuateur commandé 80, lors d'une diminution de niveau du signal de la sortie amplifiée du microphone 1 ce qui évite le hachage de la parole de l'abonné proche, et un deuxième temps de réponse de 3 ms pour mettre hors service le deuxième atténuateur commandé 80 lors d'une augmentation de niveau du signal de la sortie amplifiée du microphone 1 ce qui évite la prise en compte de bruits impulsionnels.

Le comparateur 836 reçoit sur son entrée non inverseuse une tension engendrée par le générateur de seuil de niveau 84. Celle-ci varie proportionnellement au niveau d'excitation du haut-parleur dans une plage de $-15$ à $-30$ dBm qui correspond pour le microphone 1 à une pression d'excitation acoustique contenue dans une plage commençant de 70 à 80 dBSPL en absence d'excitation du haut-parleur 8 et finissant à 90 dBSPL au maximum de l'excitation du haut-parleur 8. Lorsque la tension appliquée à son entrée inverseuse est inférieure à la tension de seuil appliquée sur son entrée non inverseuse, ce qui se produit lors d'un silence de l'abonné proche, le comparateur 836 délivre en sortie une tension positive, proche de la tension de polarisation qui met en service l'atténuateur commandé 80 et provoque l'affaiblissement du signal du microphone 1 parvenant au circuit d'aiguillage 3. Lorsque la tension appliquée à son entrée inverseuse est supérieure à la tension de seuil appliquée sur son entrée non inverseuse ce qui se produit lorsque l'abonné proche parle, le comparateur 836 délivre en sortie une tension nulle ou très faible qui met hors service l'atténuateur commandé 80 lequel se laisse franchir par le signal du microphone 1 sans l'affaiblir.

Le générateur de seuil de niveau 84 comporte en entrée un filtre passe-haut à capacité série 840 et résistance parallèle 841 suivi d'un redresseur 842, d'un filtre passe-bas à résistance série 843, capacité parallèle 844 et résistance parallèle 845 de décharge de la capacité, et d'un amplificateur différentiel 846 qui est connecté par son entrée inverseuse à un pont de polarisation réglable 847 et par son entrée non inverseuse en sortie du filtre passe-bas, et qui contrôle l'entrée de réglage de seuil 831 du détecteur de niveau à seuil variable 83.

Le filtre passe-haut d'entrée 840, 841 du générateur de seuil de niveau 84 élimine du signal d'entrée les composantes basse fréquence auxquelles le haut-parleur 8 est peu sensible. Le redresseur 842 détecte l'enveloppe du signal d'excitation du haut-parleur 8 privé de ses composantes aux plus basses fréquences. Le filtre passe-bas mémorise la valeur crête de cette enveloppe. Il possède un temps de montée de l'ordre de 1 ms déterminé par les valeurs de la résistance série 843 et la capacité parallèle 844 et un temps de descente de l'ordre de 100 ms déterminé par les valeurs de la capacité parallèle 844 de la résistance parallèle 845. L'amplificateur différentiel 846 engendre à partir de cette valeur crête une tension constituant le seuil de niveau pour le détecteur de niveau à seuil variable 83, tension qui peut être amenée dans la plage des −15 à −30 dBm, par ajustage du pont de polarisation réglable 847.

En pratique, le deuxième atténuateur commandé 80 est mis en service pendant les silences de l'abonné proche ou il améliore l'efficacité du dispositif anti-effet Larsen et diminue le bruit d'ambiance de l'écouteur 6, en introduisant un affaiblissement de 7 dB sur les trajets du signal du microphone 1 au travers des fuites du circuit d'aiguillage 3 à la fois vers le haut-parleur 8 et vers l'écouteur 6. Cette mise en oeuvre au cours des silences de l'abonné proche tient compte de l'influence du haut-parleur 8 sur le niveau du bruit d'ambiance. Elle a lieu a plus bas niveau lorsque le signal d'excitation du haut-parleur 8 est faible car le risque d'amorçage d'un effet Larsen ne se produit que lors d'un rapprochement du microphone 1 et du haut-parleur 8 pendant les operations de décrochage et de raccrochage du combiné alors que cette mise en service a déjà eu lieu. Lorsque le signal d'excitation du haut-parleur 8 est moyen ou fort, la mise en service du deuxième atténuateur 80 a lieu pour un niveau de bruit d'ambiance plus élevé proportionnel au signal acoustique du haut-parleur 8 à l'origine des risques d'amorçage d'un effet Larsen.

Un troisième atténuateur commandé 85 identique au deuxième atténuateur commandé 80 est intercalé avec le premier atténuateur commandé 13 en entrée de l'amplificateur 7 du haut-parleur 8 et commandé en opposition avec le deuxième atténuateur commandé 80 par l'intermédiaire d'un amplificateur inverseur 86 connecté en sortie du détecteur de niveau à seuil variable 83.

Il complète l'action anti-effet Larsen du deuxième atténuateur commandé 80 et entre en service alors que ce dernier ne l'est pas, c'est-à-dire lorsque l'abonné proche parle, affaiblissant de 7 db le signal d'excitation du haut-parleur 8 et diminuant d'autant les risques d'amorçage d'un effet Larsen par-un couplage acoustique du microphone 1 et du haut-parleur 8.

Les diagrammes de la figure 2 illustrent en a la variation moyenne de la tension délivrée par un microphone à charbon en fonction de la pression d'excitation acoustique lorsqu'il est traversé par un courant de polarisation de 30 mA. Cette variation de tension représentée par une courbe en tiretets n'est qu'une moyenne car les microphones à charbon ont une courbe de réponse fluctuante, en étroite dépendance avec la répartition et le tassement des grains de charbon dans leur capsule qui sont fonction des conditions antérieures d'utilisation. Elle montre cependant que les microphones à charbon sont peu sensibles à bas niveau d'excitation ce qui est favorable à la fois au confort d'écoute et a l'absence d'effet Larsen dans une ambiance silencieuse puisque le microphone ne capte pratiquement pas de bruit d'ambiance.

En b, sur ces mêmes diagrammes est représentée par un alignement de croix la variation de tension engendrée par un microphone à efficacité électrique linéaire tel qu'un microphone électrodynamique ou un microphone à électrets, amplifié au niveau de celle d'un microphone à charbon. On se retrouve avec une sensibilité à bas niveau beaucoup plus importante qui peut provoquer au travers des fuites du circuit d'aiguillage un bruit d'ambiance désagréable dans l'écouteur de l'abonné proche et qui rend le problème de l'effet Larsen plus aigu.

En c, est représentée par des lignes brisées la variation de tension engendrée par un microphone à efficacité électrique linéaire, amplifiée au niveau de celle d'un microphone à charbon, parvenant au circuit d'aiguillage 3 en présence du circuit électronique que l'on vient de décrire. Au dessus d'un seuil de pression d'excitation acoustique variant dans les limites de 80 à 90 dBSPL proportionnellement au niveau du signal d'excitation du haut-parleur, le deuxième atténuateur commandé 80 n'est pas en service et le signal du microphone 1 parvient dans son intégralité au circuit d'aiguillage 3. En dessous de ce seuil de pression d'excitation acoustique, le deuxième atténuateur 80 est mis en service et affaiblit de 7 dB le signal du microphone parvenant au circuit d'aiguillage 3 de sorte que le niveau du signal émis en ligne et surtout de celui des fuites vers l'écouteur et le haut-parleur devient inférieur à celui du signal engendré par un microphone à charbon pendant les silences de l'abonné proche, que l'abonné lointain parle ou non, ce qui améliore le confort subjectif d'écoute et diminue les risques d'amorçage d'effet Larsen.

On peut, sans sortir du cadre de l'invention modifier certaines dispositions ou remplacer certains moyens par des moyens équivalents.

## Revendications

1. Dispositif anti-effet Larsen pour poste téléphonique comportant un circuit d'aiguillage deux fils-quatre fils (3) assurant localement la séparation des sens émission et de réception superposés au niveau de la ligne téléphonique (4), un microphone (1) connecté à la voie d'émission, côté quatre fils, du circuit d'aiguillage (3), un haut-parleur (8) précédé d'un amplificateur (7) connecté à la voie réception, côté quatre fils, du circuit d'aiguillage (3), un premier atténuateur commandé (13) à commande d'activation intercalé entre l'amplificateur (7) du haut-parleur (8) et le circuit d'aiguillage (3), et un détecteur d'oscillation (9) connecté en entrée à la sortie du microphone (1) et en sortie à la commande d'activation du premier atténuateur commandé (13), caractérisé en ce qu'il comporte en outre :

– un générateur de seuil de niveau (84) recevant en entrée le signal d'excitation du haut-parleur (8) et déterminant son niveau,

– un deuxième atténuateur commandé (80) à commande d'activation (82) intercalé entre le microphone (1) et le circuit d'aiguillage (3) et

– un détecteur de niveau à seuil variable (83) ayant une entrée de réglage de seuil (831) connectée à la sortie du générateur de seuil de niveau (84), une entrée de mesure de niveau (830) connectée à la sortie du microphone (1) et une sortie connectée à la commande d'activation du deuxième atténuateur commandé (80), ledit détecteur de niveau à seuil variable (83) mettant en service le deuxième atténuateur commandé (80) lorsque le niveau du signal de sortie du microphone (1) passe en dessous du seuil fourni par le générateur de seuil de niveau (84) et mettant hors service le deuxième atténuateur commandé (80) lorsque le niveau du signal de sortie du microphone (1) redevient supérieur à ce seuil.

2. Dispositif selon la revendication 1, caractérisé en ce que l'affaiblissement du dit deuxième atténuateur commandé (80) est de l'ordre de 6 à 10 dB.

3. Dispositif selon la revendication 1, caractérisé en ce que le seuil du détecteur à seuil de niveau variable (83) évolue dans une plage correspondant à celle des variations du signal de sortie du microphone (1) pour une pression d'excitation acoustique variant de 70 à 90 dBSPL, ledit seuil étant d'autant plus élevé que le niveau du signal d'excitation du haut-parleur est fort.

4. Dispositif selon la revendication 1, caractérisé en ce que ledit détecteur de niveau à seuil variable (83) présente un premier temps de réponse de l'ordre de 10 ms pour engendrer une commande de mise en service du deuxième atténuateur commandé (80) lorsque le niveau du signal de sortie du microphone (1) passe en dessous de son seuil et un deuxième temps de réponse de l'ordre de 3 ms pour engendrer une commande de mise hors service du deuxième atténuateur commandé (80) lorsque le niveau du signal de sortie du microphone (1) repasse au dessus de son seuil.

5. Dispositif selon la revendication 1, caractérisé en ce que ledit générateur de seuil de niveau (84) présente un temps de montée de l'ordre de 1 ms pour suivre une augmentation de niveau du signal d'excitation du haut-parleur (8) et un temps de descente de l'ordre de 100 ms pour suivre une décroissance de niveau du signal d'excitation du haut-parleur (8).

6. Dispositif selon la revendication 1, caractérisé en ce qu'il comporte en outre un troisième atténuateur commandé (85) intercalé entre l'amplificateur (7) du haut-parleur (8) et le circuit d'aiguillage (3) et commandé en opposition avec le deuxième atténuateur commandé (80) intercalé en sortie du microphone (1), par l'intermédiaire d'un amplificateur inverseur (86) connecté en sortie du détecteur de niveau à seuil variable (83).

## Ansprüche

1. Anti-Larseneffekteinrichtung für Fernsprechapparate, mit einem Zweidraht-Vierdraht-Gabelungskreis (3), der örtlich die Trennung der auf der Fernsprechleitung (4) überlagerten Sende- und der Empfangsrichtung bewirkt, einem Mikrophon (1), das an der Vierdrahtseite an den Sendekanal des Gabelungskreises angeschlossen ist, einem Lautsprecher (8) mit vorgeschaltetem Verstärker (7), die an der Vierdrahtseite an den Empfangskanal des Gabelungskreises (3) angeschlossen sind, einem ersten gesteuerten Dämpfungskreis (13) mit Aktivierungssteuerung, der zwischen den Verstärker (7) des Lautsprechers (8) und den Gabelungskreis (3) geschaltet ist, und einem Oszillationsdetektor (9), dessen Eingang an den Ausgang des Mikrophons (1) und dessen Ausgang an die Aktivierungssteuerung des ersten gesteuerten Dämpfungskreises (13) angeschlossen ist, dadurch gekennzeichnet, daß die Einrichtung weiter aufweist :

– einen Pegelschwellwertgenerator (84), der am Eingang das Erregungssignal des Lautsprechers (8) empfängt und seinen Pegel bestimmt,

– einen zweiten gesteuerten Dämpfungskreis (80) mit Aktivierungssteuerung (82), der zwischen das Mikrophon (1) und den Gabelungskreis (3) geschaltet ist, und

– einen Pegeldetektor (83) mit veränderlichem Schwellwert, bei dem ein Eingang (831) für die Schwellwerteinstellung mit dem Ausgang des Pegelschwellwertgenerators (84), ein Pegelmeßeingang (830) mit dem Ausgang des Mikrophons (1) und ein Ausgang mit der Aktivierungssteuerung des zweiten gesteuerten Dämpfungskreises (80) verbunden ist, wobei der Pegeldetektor (83) mit veränderlichem Schwellwert den zweiten gesteuerten Dämpfungskreis (80) in Betrieb setzt, wenn der Pegel des Ausgangssignals des Mikrophons (1) unter den vom Pegelschwellwertgenerator (84) gelieferten Schwellwert fällt, und den zweiten gesteuerten Dämpfungskreis (80) außer Betrieb setzt, wenn der Pegel des Ausgangssignals des Mikrophons (1) wieder über diesen Schwellwert steigt.

2. Einrichtung nach Anspruch 1, dadurch gekennzeichnet, daß die Dämpfung des zweiten gesteuerten Dämpfungskreises (80) zwischen 6 und 10 dB liegt.

3. Einrichtung nach Anspruch 1, dadurch gekennzeichnet, daß sich der Schwellwert des Schwellwertdetektors (83) mit veränderlichem Pegel in einem Wertebereich bewegt, der bei einem akustischen Erregungsdruck von 70 bis 90 dBSPL den Veränderungen des Ausgangssignals des Mikrophons (1) entspricht, wobei der Schwellwert umso höher ist, je höher der Pegel des Erregungssignals des Lautsprechers ist.

4. Einrichtung nach Anspruch 1, dadurch gekennzeichnet, daß der Pegeldetektor (83) mit veränderlichem Schwellwert eine erste Ansprechzeit von etwa 10 ms zur Erzeugung eines Inbetriebnahmebefehls für den zweiten gesteuerten Dämpfungskreis (80) besitzt, wenn der Pegel des Ausgangssignals dds Mikrophons (1) unter seinen Schwellwert fällt, und eine zweite Ansprechzeit von etwa 3 ms zur Erzeugung eines Außerbetriebnahmebefehls für den zweiten gesteuerten Dämpfungskreis (80) besitzt, wenn der Pegel des Ausgangssignals des Mikrophons (1) wieder über seinen Schwellwert steigt.

5. Einrichtung nach Anspruch 1, dadurch gekennzeichnet, daß der Pegelschwellwertgenerator (84) eine Anstiegsdauer von etwa 1 ms besitzt, um einer Pegelerhöhung des Erregungssignals des Lautsprechers (8) zu folgen, und eine Abstiegsdauer von etwa 100 ms, um eine Pegelabnahme des Erregungssignals des Lautsprechers (8) zu folgen.

6. Einrichtung nach Anspruch 1, dadurch gekennzeichnet, daß sie weiter einen dritten gesteuerten Dämpfungskreis (85) aufweist, der zwischen den Verstärker (7) des Lautsprechers (8) und den Gabelungskreis (3) geschaltet ist und gegensinnig zum zweiten gesteuerten Dämpfungskreis (80) angesteuert wird, der über einen an den Ausgang des Pegeldetektors (83) mit veränderlichem Schwellwert angeschlossenen Umkehrverstärker (86) an den Ausgang des Mikrophons (1) angeschlossen ist.

## Claims

1. An anti-Larsen-effect device for a telephone set including a two-wire/four-wire hybrid circuit (3) for locally separating the transmit direction and the receive direction which are superposed on the telephone line (4), a microphone (1) connected to the transmit path on the four-wire side of the hybrid circuit (3), a loudspeaker (8) preceded by an amplifier (7) connected to the receive path on the four-wire side of the hybrid circuit (3), a first controlled attenuator (13) having an activation control input and interposed between the amplifier (7) of the loudspeaker (8) and the hybrid circuit (3), and an oscillation detector (9) having its input connected to the output from the microphone (1) and having its output connected to the activation control input of the first controlled attenuator (13), characterized in that it further comprises

– a level threshold generator (84) receiving the excitation signal of the loudspeaker (8) at its input, and determining the level thereof,

– a second controlled attenuator (80) having an activation control input (82) and interposed between the microphone (1) and the hybrid circuit (3), and

– a variable threshold level detector (83) having an adjustable threshold input (831) connected to the output from the level threshold generator (84), a level measuring input (830) connected to the output from the microphone (1), and an output connected to the activation control input of the second controlled attenuator (80), said variable threshold level detector (83) putting the second controlled attenuator (80) into service when the level of the output signal from the microphone (1) falls below the threshold provided by the level threshold generator (84) and putting said second controlled attenuator (80) out of service when the level of the output signal from the microphone (1) becomes again greater than said threshold.

2. A device according to claim 1, characterized in that the attenuation provided by said second controlled attenuator (80) is about 6 dB to 10 dB.

3. A device according to claim 1, characterized in that the threshold of the variable level threshold detector (83) varies over a range corresponding to the range of variation in the microphone output signal for an acoustic excitation pressure varying from 70 dbSPL to 90 dBSPL, said threshold increasing with increasing level in the excitation signal to the loudspeaker.

4. A device according to claim 1, characterized in that said variable threshold level detector (83) has a first response time of about 10 ms for generating a control signal to put said second controlled attenuator (80) into service when the level of the output signal from the microphone (1) passes below its threshold, and a second response time of about 3 ms for generating a control signal to put said second controlled attenuator (80) out of service when the level of the output signal from the microphone (1) exceeds again its threshold.

5. A device according to claim 1, characterized in that said level threshold generator (84) has a rise time of about 1 ms for following an increase in the level of the excitation signal of the loudspeaker (8), and a fall time of about 100 ms for following a decrease in the level of the excitation signal of the loudspeaker (8).

6. A device according to claim 1, characterized in that it further includes a third controlled attenuator (85) interposed between the amplifier (7) of the loudspeaker (8) and the hybrid circuit (3), and controlled in opposition to said second controlled attenuator (80) interposed at the output from the microphone (1) by means of an inverting amplifier (86) connected to the output from the variable threshold level detector (83).

# FIG.1

EP 0 280 105 B1

# FIG.2